# FASCICULE DE BREVET EUROPEEN

(11) **EP 2 768 781 B1**
(45) Date de publication et mention de la délivrance du brevet: **27.03.2019**
(21) Numéro de dépôt: 12790596.6
(22) Date de dépôt: 18.10.2012
(51) Int. Cl.: C03C 13/06, C03C 25/34, C03C 25/24, C03C 25/26, C09J 177/06, C09J 179/04, C09J 179/08, D04H 1/4218, D04H 1/4209, D04H 1/488

(54) **COMPOSITION D'ENCOLLAGE A FAIBLE TENEUR EN FORMALDEHYDE POUR LAINE MINERALE RESISTANT AU FEU ET PRODUIT ISOLANT OBTENU.**
SCHLICHTUNGSZUSAMMENSETZUNG MIT NIEDRIGEM FORMALDEHYDGEHALT FÜR FEUERFESTE MINERALWOLLE UND GEWONNENES ISOLIERPRODUKT
SIZING COMPOSITION HAVING A LOW FORMALDEHYDE CONTENT FOR FIRE-RESISTANT MINERAL WOOL AND INSULATION PRODUCT OBTAINED

(30) Priorité: 20.10.2011 FR 1159509
(43) Date de publication de la demande: 27.08.2014
(73) Titulaire: Saint-Gobain Isover, 92400 Courbevoie (FR)
(72) Inventeur: KIEFER, Lionel, 75010 Paris (FR); ROUSSELET, Guillaume, 60600 Etouy (FR)
(74) Mandataire: Saint-Gobain Recherche
(86) Numéro de dépôt international: PCT/FR2012/052374
(87) Numéro de publication internationale: WO 2013/057432

(56) Documents cités:
- EP-A1- 0 748 777
- EP-A1- 0 873 976
- EP-B1- 1 868 954
- WO-A2-01/00699
- WO-A2-2011/068984
- DE-A1- 19 606 394
- GB-A- 1 120 264
- US-A- 3 218 279
- US-A- 4 330 444
- US-A- 4 480 068
- US-A- 5 340 868
- US-A1- 2008 274 291
- US-A1- 2010 252 771

## Description

La présente invention se rapporte au domaine des produits d'isolation thermique et/ou acoustique aptes à résister au feu, à base de laine minérale, notamment de verre ou de roche, liée par un liant organique.

Plus précisément, l'invention concerne une composition d'encollage contenant une résine thermodurcissable et une résine amine-acide carboxylique en tant qu'agent retardateur de feu.

L'invention a aussi pour objet les produits d'isolation à base de laine minérale encollée au moyen de ladite composition d'encollage.

Les produits à base de fibres de verre ou de roche sont largement utilisés, en particulier ceux dont les fibres sont sous la forme de laine minérale qui possèdent des propriétés d'isolation thermique et/ou acoustique.

Ces produits d'isolation sont fabriqués à partir de fibres minérales obtenues par différents procédés, par exemple selon la technique connue du fibrage centrifuge interne ou externe. La technique par centrifugation interne notamment consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

Pour assurer l'assemblage des fibres entre elles et permettre à la nappe d'avoir de la cohésion, on projette sur les fibres, à la sortie du dispositif centrifuge, une composition d'encollage qui contient une résine thermodurcissable, le plus souvent une résine phénolique appartenant à la famille des résols. La nappe de fibres revêtues de la composition d'encollage est soumise à un traitement thermique (à une température généralement supérieure à 100°C) afin d'effectuer la polycondensation de la résine et obtenir un produit d'isolation thermique et/ou acoustique ayant des propriétés spécifiques, notamment une stabilité dimensionnelle, une résistance à la traction, une reprise d'épaisseur après compression et une couleur homogène.

Dans le produit d'isolation, les fibres minérales sont liées au niveau de leurs points de contact par la résine réticulée qui forme un liant infusible et insoluble dans l'eau.

Dans certaines applications où le produit d'isolation est exposé à des températures élevées, (appareils ménagers, conduits de chauffage, ...) ou doit satisfaire à des réglementations strictes (navires, bâtiments publics, notamment au regard des plafonds), il est impératif que celui-ci possède en outre une bonne résistance au feu. En d'autres termes, il s'avère essentiel que la propagation de la flamme soit empêchée ou au moins retardée quand la résine réticulée qui lie les fibres est soit soumise à des températures importantes provoquant sa combustion, soit exposée directement aux flammes.

Pour améliorer la résistance au feu de tels produits isolants, une solution consiste à ajouter un agent retardateur de feu dans à la composition d'encollage. Ledit agent peut être un composé phosphoré (voir US 4 159 139), un composé halogéné, notamment chloré ou bromé, un composé azoté (voir US 5 840 413), un hydroxyde de métal (voir US 6 368 991 et US 2007/0105467), un sel métallique d'acide carboxylique (voir WO 2010/076533) ou un composé contenant du bore (voir US 4 176 105, US 2 990 307 et US 3 218 279).

Une autre solution consiste à utiliser en tant que résine thermodurcissable une résine phénol-formaldéhyde modifiée par un composé azoté tel que l'urée, le dicyandiamide ou la mélamine. Lorsque la température s'élève, la résine modifiée permet de libérer de l'azote qui protège le produit d'isolation en lui conférant une meilleure résistance au feu.

Notamment, il est connu d'utiliser une résine phénol-formaldéhyde modifiée par de l'urée en mélange avec soit a) un mélange d'acide borique et d'un composé hydroxylé et b) un composé azoté, soit c) un composé acide borique-hydroxy-amide (voir US 4 480 068).

WO 01/00699 A2 divulgue une composition d'encollage pour la fabrication de produit d'isolation thermique, ladite composition contenant une résine phenol-formaldéhyde, une amine et une résine acide carboxylique.

Une autre solution encore consiste à remplacer une partie de la résine thermodurcissable par une résine aldéhyde-amine, en particulier formaldéhyde-dicyandiamide. Cependant, la stabilité d'une telle résine est faible et n'excède pas 2 à 3 semaines. Au-delà de cette période, la résine devient trouble et a tendance à précipiter ce qui la rend impropre à une utilisation dans un encollage pulvérisable. La stabilité de la résine formaldéhyde-dicyandiamide étant d'autant plus faible que sa concentration est élevée.

La présente invention a pour but de proposer une composition d'encollage adaptée pour fabriquer un produit d'isolation thermique et/ou acoustique résistant au feu, ladite composition contenant une résine thermodurcissable et une résine amine-acide carboxylique.

La composition d'encollage conforme à l'invention présente en outre les avantages suivants :
- la préparation de la résine amine-acide carboxylique ne fait pas intervenir de formaldéhyde contrairement aux compositions connues dans l'état de la technique antérieure. Une telle résine répond donc aux exigences réglementaires qui imposent que le taux de formaldéhyde libre soit aussi faible que possible, et
- la résine amine-acide carboxylique est soluble dans l'eau. De ce fait, il est possible d'inclure une quantité importante de cette résine dans la composition d'encollage et par conséquent d'augmenter la résistance au feu du produit d'isolation final.

La résine thermodurcissable est une résine apte à réticuler sous l'action de la chaleur, notamment une résine phénolique, une résine urée-formaldéhyde, une résine poly(acide (méth)acrylique), par exemple renfermant un homopolymère d'acide (méth)acrylique ou un copolymère acide (méth)acrylique-hydroxyéthylacrylate, une résine polyuréthane, une résine epoxy, une résine alkyde ou une résine à base de sucre et d'autre(s) composant(s), par exemple d'acide(s) organique(s) polycarboxylique(s) (WO 2009/080938) ou de leurs sels (WO 2007/014236 et WO 2008/127936), de sel inorganique et d'une source d'azote (WO 2009/019232), de sel métallique d'acide inorganique (FR 2 951 189) et d'un agent de réticulation polyfonctionnel (WO 2010/029266).

De préférence, la résine est une résine phénolique, avantageusement appartenant à la famille des résols. Les résols sont obtenus par condensation d'un phénol, en particulier le phénol, et d'un aldéhyde, en particulier le formaldéhyde, en présence d'un catalyseur basique, dans un rapport molaire aldéhyde/phénol supérieur à 1 de manière à favoriser la réaction entre le phénol et l'aldéhyde et à diminuer le taux de phénol résiduel dans la résine.

La résine phénolique peut être une résine phénol-formaldéhyde modifiée par de l'urée, l'urée pouvant être ajoutée au cours de la synthèse (dans le mélange réactionnel contenant le phénol et le formaldéhyde) ou après que la résine a été formée, c'est-à-dire pendant la phase de refroidissement de la résine ou dans la résine finale (à la température ambiante).

Avantageusement, la résine phénolique contient une faible proportion d'aldéhyde libre, en particulier de formaldéhyde, par exemple au plus égale à 0,1 %. Une telle résine est par exemple obtenue par réaction de phénol, de formaldéhyde et d'une amine (WO 2008/043960 et WO 2008/043961) ou par réaction de phénol, de formaldéhyde et de glycine.

La résine amine-acide carboxylique conforme à l'invention est obtenue par un procédé qui se déroule selon un cycle de température en trois étapes.

Dans la première étape, on mélange l'amine et l'acide carboxylique et on porte le mélange à une température qui varie de 30 à 60°C, de préférence de 40 à 50°C et avantageusement est égale à 45°C.

Dans la deuxième étape, on porte le mélange réactionnel à une température qui varie de 60 à 90°C pendant une durée d'environ 30 minutes et on maintient cette température pendant 120 à 240 minutes.

Dans la troisième étape, le mélange réactionnel est refroidi progressivement à une température qui varie de 20 à 25°C.

Les réactifs sont mis en oeuvre dans des proportions telles que le rapport molaire amine/acide carboxylique varie de 0,5 à 3, de préférence 1,0 à 2,0.

L'amine est choisie parmi le dicyandiamide, la mélamine, la guanidine et l'aminoguanidine. On préfère le dicyandiamide.

L'acide carboxylique est un acide organique renfermant de préférence au moins deux fonctions carboxyliques avantageusement au plus 300, mieux encore au plus 70 et encore plus avantageusement au plus 15 fonctions carboxyliques.

L'acide carboxylique se présente sous la forme d'un monomère ou d'un polymère, ou d'un précurseur d'acide carboxylique.

L'acide organique carboxylique non polymérique est un acide alicyclique, ramifié ou non, saturé ou insaturé, un acide cyclique ou un acide aromatique.

A titre d'exemples d'acides carboxyliques non polymériques, on peut citer les acides monocarboxyliques tels que l'acide acétique, les acides dicarboxyliques tels que l'acide oxalique, l'acide malonique, l'acide succinique, l'acide glutarique, l'acide adipique, l'acide pimélique, l'acide subérique, l'acide azélaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique ou les précurseurs de ces acides tels que les anhydrides, l'acide tétrahydrophtalique, l'acide isophtalique, l'acide téréphtalique, l'acide mésaconique et l'acide citraconique; les acides tricarboxyliques tels que l'acide citrique, l'acide tricarballique, l'acide 1,2,4-butanetricarboxylique, l'acide aconitique, l'acide hémiméllitique, l'acide triméllitique et l'acide trimésique; et les acides tétracarboxyliques tels que l'acide 1,2,3,4-butanetétracarboxylique et l'acide pyroméllitique.

A titre d'exemple d'acides organiques carboxyliques polymériques, on peut citer les homopolymères d'acide carboxylique insaturé tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide α,β-méthylèneglutarique et les monoesters d'acide dicarboxylique insaturés, tels que les maléates et les fumarates d'alkyle en C₁-C₁₀, et les copolymères d'au moins un acide carboxylique insaturé précité et d'au moins un monomère vinylique.

Les acides organiques carboxyliques non polymériques sont préférés. Avantageusement, l'acide organique carboxylique est un acide polycarboxylique choisi parmi l'acide succinique, l'acide tartrique, l'acide maléique (ou l'anhydride maléique), l'acide citrique et l'acide 1,2,3,4-butanetétracarboxylique, et de préférence l'acide citrique.

De manière avantageuse, la résine amine-acide carboxylique est modifiée par un alcool, ce qui permet de la rendre plus soluble dans l'eau.

La modification par l'alcool est effectuée en introduisant l'alcool lors de la première étape du procédé précité, en mélange avec l'amine et l'acide carboxylique et avant le démarrage du cycle de température.

Le rapport molaire alcool/amine varie de 0,1 à 1 et de préférence 0,4 à 0,6.

L'alcool peut être tout composé renfermant au moins une fonction hydroxyle libre, par exemple l'éthanol, le propanol, le butanol, l'éthylène glycol, le propylène glycol, les polyalkylèneglycols tels que le polyéthylèneglycol et le polypropylèneglycol, le glycérol, les saccharides, de préférence les oligosaccharides (au plus 10 motifs de sucre), tels que le glucose et le saccharose, et les dérivés hydrogénés des saccharides précités, tels que le sorbitol. De préférence, l'alcool renferme au moins deux fonctions hydroxyles libres, avantageusement au moins trois et mieux encore au plus 100, de préférence au plus 10.

L'alcool conforme à l'invention peut être constitué d'un seul alcool ou d'un mélange d'alcools. On préfère le glucose, le saccharose et les mélanges d'oligosaccharides, avantageusement obtenus par hydrolyse d'amidon, et mieux encore le glucose.

La résine préférée est obtenue par réaction de dicyandiamide et d'acide citrique ou de dicyandiamide, d'acide citrique et d'oligosaccharide(s).

La résine amine-acide carboxylique, éventuellement modifiée par un alcool, présente une teneur en matières solides (extrait sec) de l'ordre de 50 %. Le pH de la résine varie généralement de 3 à 6.

Dans la composition d'encollage, la résine amine-acide carboxylique, éventuellement modifiée par un alcool, est utilisée à raison de 5 à 70 parts en poids (de matières solides) pour 100 parts en poids (de matières solides) de résine thermodurcissable et le cas échéant d'urée, de préférence au plus 60 parts, avantageusement au moins 10 parts et mieux encore de 20 à 40 parts.

La composition d'encollage préférée renferme une résine phénol-formaldéhyde à faible teneur en formaldéhyde libre, éventuellement modifiée par de l'urée, de préférence une résine obtenue par réaction de phénol, de formaldéhyde et d'une amine ou de glycine, et une résine dicyandiamide-acide citrique ou dicyandiamide-acide citrique-oligosaccharides.

La composition d'encollage conforme à l'invention peut comprendre en outre les additifs conventionnels ci-après dans les proportions suivantes calculées sur la base de 100 parts en poids de résine thermodurcissable, le cas échéant d'urée, et de résine amine-acide carboxylique, éventuellement modifiée par un alcool :
- 0 à 2 parts de silane, en particulier un aminosilane,
- 0 à 20 parts d'huile, de préférence 4 à 15 parts,
- 0 à 25 parts d'un catalyseur de réticulation, par exemple le sulfate d'ammonium ou l'hyposulfite de sodium, de préférence moins de 7 parts,
- 0 à 25 parts d'un sucre, de préférence le glucose ou le saccharose,
- 0 à 20 parts d'ammoniaque (solution à 20 % en poids), de préférence moins de 12 parts,
- 0 à 20 parts d'un silicone.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; le sulfate d'ammonium ou l'hyposulfite de sodium sert de catalyseur de réticulation (dans l'étuve à chaud) après la pulvérisation de la composition d'encollage sur les fibres ; le sucre sert d'extendeur ; l'ammoniaque joue, à froid, le rôle de retardateur de polycondensation ; le silicone joue le rôle d'agent hydrophobe.

La laine minérale sur laquelle est appliquée la composition d'encollage peut être constituée de fibres de verre ou de roche.

Les fibres de verre peuvent être constituées d'un verre de quelque nature que ce soit, en particulier un verre à teneur élevée en alumine tel que décrit dans WO 00/17117, qui comprend les constituants ci-après dans les proportions suivantes, exprimées en pourcentages pondéraux :

| | |
|---|---|
| SiO₂ | 39-55 %, de préférence 40-52 % |
| Al₂O₃ | 16-27 %, de préférence 16-25 % |
| CaO | 3-35 %, de préférence 10-25 % |
| MgO | 0-15 %, de préférence 0-10 % |
| Na₂O | 0-15 %, de préférence 6-12 % |
| K₂O | 0-15 %, de préférence 3-12 % |
| R₂O (Na₂O + K₂O) | 10-17 %, de préférence 12-17 % |
| P₂O₅ | 0-3 %, de préférence 0-2 % |
| Fe₂O₃ | 0-15 %, |
| B₂O₃ | 0-8 %, de préférence 0-4 % |
| TiO₂ | 0-3 %, |

la teneur en MgO étant comprise entre 0 et 5 % lorsque la teneur en R₂O est inférieure ou égale à 13,0 %.

Avantageusement, le verre a la composition décrite dans WO 2005/033032 qui comprend les constituants ci-après dans les proportions suivantes (en % pondéral) :

| | |
|---|---|
| SiO₂ | 39-44 %, de préférence 40-43 % |
| Al₂O₃ | 16-27 %, de préférence 16-26 % |
| CaO | 6-20 %, de préférence 8-18 % |
| MgO | 1-5 %, de préférence 1-4,9 % |
| Na₂O | 0-15 %, de préférence 2-12 % |
| K₂O | 0-15 %, de préférence 2-12 % |
| R₂O (Na₂O + K₂O) | 10-14,7 %, de préférence 10-13,5 % |
| P₂O₅ | 0-3 %, notamment 0-2 % |
| Fe₂O₃ | 1,5-15 %, notamment 3,2-8 % |
| B₂O₃ | 0-2 %, de préférence 0-1 % |
| TiO₂ | 0-2 %, de préférence 0,4-1 %. |

La fabrication de produits d'isolation à base de laine minérale est bien connue : elle comprend une étape de fabrication de la laine elle-même, une étape d'encollage de la laine minérale et une étape de traitement thermique en vue de lier la laine minérale.

La première étape de fabrication de la laine minérale peut être mise en oeuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

La centrifugation externe consiste, elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Dans la deuxième étape, on projette sur les fibres, sur le trajet allant de la sortie du dispositif centrifuge vers l'organe récepteur, une composition d'encollage contenant une résine thermodurcissable dont le rôle est d'assurer l'assemblage des fibres entre elles et de permettre à la laine minérale d'avoir de la cohésion.

Dans la troisième étape, les fibres revêtues de l'encollage rassemblées en une nappe sont soumises à un traitement thermique, à une température généralement supérieure à 100°C, afin d'effectuer la polycondensation de la résine et obtenir ainsi une liaison des fibres par un liant infusible et insoluble dans l'eau.

A la sortie du dispositif de traitement thermique, le produit d'isolation est collecté sous forme d'enroulements ou de panneaux découpés aux dimensions souhaitées, puis emballé.

La quantité totale de résine thermodurcissable, éventuellement d'urée, et de résine amine-acide carboxylique, éventuellement modifiée par un alcool, représente 1 à 20 % en poids (de matières solides) par rapport au poids total du produit d'isolation, de préférence au plus 15 %.

Selon un mode de réalisation préféré, la résine amine-acide carboxylique, éventuellement modifiée par un alcool, est incorporée dans la composition d'encollage avant l'application sur la laine minérale.

L'incorporation de la résine amine-acide carboxylique, éventuellement modifiée par un alcool, peut se faire de manière extemporanée pour une application immédiate de la composition d'encollage, ou dans la résine thermodurcissable (ou « premix ») qui est ensuite conservée pendant une durée variable à une température de l'ordre de 10 à 20°C avant l'utilisation dans la composition d'encollage.

Selon un autre mode de réalisation, la résine amine-acide carboxylique, éventuellement modifiée par un alcool, est appliquée séparément de la composition d'encollage, par exemple au moyen d'une couronne de pulvérisation distincte de celle qui permet l'application de la composition d'encollage.

Les exemples qui suivent permettent d'illustrer l'invention sans toutefois la limiter.

Dans ces exemples, on caractérise l'aptitude à la dilution par la « diluabilité » que l'on définit comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C. Une diluabilité égale ou supérieure à 2000 %, à 20°C, est qualifiée de « diluabilité infinie ».

### EXEMPLE 1

Dans un réacteur, on introduit 194 parts en poids d'acide citrique à 99 %, 126 parts en poids de dicyandiamide à 99 % et 321 parts en poids d'eau. Le rapport molaire dicyandiamide/acide citrique est égal à 1,5.

Le milieu réactionnel est chauffé à 45°C, puis à 70°C en 30 minutes et maintenu à cette température pendant 180 minutes, et il est enfin refroidi à la température ambiante 20 à 25°C en 30 minutes.

La résine dicyandiamide-acide citrique obtenue possède un extrait sec égal à 50 % et une diluabilité à l'eau supérieure à 2000 %.

La résine est stable (aucun précipité) pendant au moins 4 mois.

### EXEMPLE 2

On procède dans les conditions de l'exemple 1 modifiées en ce que la quantité d'acide citrique et d'eau est égale à 144 parts et 270 parts, respectivement. Le rapport molaire dicyandiamide/acide citrique est égal à 2.

La résine dicyandiamide-acide citrique obtenue possède un extrait sec égal à 50 % et une diluabilité à l'eau supérieure à 2000 %.

La résine est stable (aucun précipité) pendant au moins 4 mois à une température de 20 à 25°C.

### EXEMPLE 3

On procède dans les conditions de l'exemple 1 modifiées en ce que la quantité d'acide citrique et d'eau est égale à 288 parts et 414 parts, respectivement. Le rapport molaire dicyandiamide/acide citrique est égal à 1.

La résine dicyandiamide-acide citrique obtenue possède un extrait sec égal à 50 % et une diluabilité à l'eau supérieure à 2000 %.

La résine est stable (aucun précipité) pendant au moins 4 mois.

### EXEMPLE 4

On procède dans les conditions de l'exemple 2 modifiées en ce que la quantité d'eau est égale à 405 parts en poids et en ce que l'on ajoute 135 parts en poids de glucose dans le réacteur avant le traitement thermique.

La résine dicyandiamide-acide citrique modifiée par du glucose ainsi obtenue possède un extrait sec égal à 50 % et une diluabilité à l'eau supérieure à 2000 %.

La résine est stable (aucun précipité) pendant au moins 4 mois à une température de 20 à 25°C.

### EXEMPLES 5 ET 6

On fabrique de la laine de verre à teneur élevée en alumine par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation de la composition d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 250°C où les constituants de l'encollage polymérisent pour former un liant.

La composition d'encollage comprend les constituants ci-après dans les proportions suivantes (en parts pondérales de matières sèches) :

| | |
|---|---|
| - résine thermodurcissable | 52,5 |
| - urée | 10,5 |
| - résine (agent retardateur de feu) | 30,0 |
| - silane | 0,5 |
| - sulfate d'ammonium | 1,0 |
| - glucose | 7,0 |
| - huile minérale | 7,0 |

Les produits d'isolation présentent une densité de 53 kg/m³ et une épaisseur de 17 mm.

La résine thermodurcissable est un résol obtenu par réaction de phénol, de formaldéhyde et de glycine dans les conditions suivantes :
Dans un réacteur de 2 litres surmonté d'un condenseur et équipé d'un système d'agitation, on introduit 318,5 g de phénol (pureté 99 % ; 3,35 moles) 261,9 g de paraformaldéhyde (pureté 96 % ; 9,37 moles) et 296,8 g d'eau, et on chauffe le mélange à 45°C sous agitation. Le rapport molaire formaldéhyde/phénol est égal à 2,5.

On ajoute régulièrement en 30 minutes 47,4 g de soude en solution aqueuse à 50 % (soit 7 % en poids par rapport au phénol), puis on élève la température progressivement à 70°C en 30 minutes et on la maintient pendant 120 minutes (taux de conversion du phénol au moins égal à 93 %).

Ensuite, on diminue la température à 60°C en 30 minutes et simultanément on introduit dans le mélange réactionnel, de manière régulière, 75 g de glycine (pureté 98 % ; 0,98 mole). On maintient la température à 60°C pendant 90 minutes puis on refroidit le mélange jusqu'à 20°C environ en 40 minutes. La résine liquide obtenue est limpide, possède un extrait sec égal à 55 %, un pH égal à 7,4 et une diluabilité à l'eau, à 20°C, supérieure à 2000 %. La résine présente un taux de formaldéhyde libre inférieur à 0,1 % et un taux de phénol libre égal à 0,25 %, les taux étant exprimés en poids total de liquide. La résine est stable pendant au moins 6 semaines à 20°C.

La résine utilisée en tant qu'agent retardateur de feu est la résine dicyandiamide-acide citrique de l'exemple 2 (exemple 5). A titre de comparaison, il a été utilisé également une composition d'encollage ne contenant pas de résine en tant qu'agent anti-feu (exemple 6 comparatif).

Les produits d'isolation selon les exemples 5 et 6 présentent une perte au feu égale à 9,7 et 10,5 %, respectivement % (la perte au feu correspondant à la proportion pondérale de matières organiques sur le produit, que l'on détermine par pesée différentielle du produit avant/après traitement thermique de décomposition des matières organiques).

On soumet les produits d'isolation au test de combustion lente (« glowing » en anglais) selon la norme DIN 4102-15 (1990). On mesure la longueur résiduelle à l'intérieur du produit, qui demeure intact après avoir subi le test. Le produit répond à la norme si la longueur résiduelle est au moins égale à 35 cm.

| | Ex. 5 | Ex. 6 (comp.) |
|---|---|---|
| Longueur résiduelle (cm) | 42 | 10 |

Les performances mécaniques des produits d'isolation sont comparables, notamment en ce qui concerne la résistance à la compression et l'épaisseur du produit mesurées avant et après traitement dans un autoclave.

## Revendications

1. Composition d'encollage pour la fabrication de produit d'isolation thermique et/ou acoustique résistant au feu, à base de laine minérale, **caractérisée en ce qu'**elle contient :
- une résine thermodurcissable choisie parmi une résine phénolique, la résine phénolique peut appartenir à la famille des résols et être éventuellement modifiée par de l'urée, une résine urée-formaldéhyde, une résine poly(acide (méth)acrylique), une résine polyuréthane, une résine epoxy, une résine alkyde ou une résine à base de sucre et d'autre(s) composant(s), et
- une résine amine-acide carboxylique dans laquelle l'amine est choisie parmi le dicyandiamide, la mélamine, la guanidine et l'aminoguanidine, la résine amine-acide carboxylique est éventuellement modifiée par un alcool,
la résine amine-acide carboxylique, éventuellement modifiée par un alcool, est utilisée à raison de 5 à 70 parts en poids de matières solides pour 100 parts en poids de matières solides de résine thermodurcissable et le cas échéant d'urée.

2. Composition selon la revendication 1, **caractérisée en ce que** la résine thermodurcissable est une résine phénolique appartenant à la famille des résols, éventuellement modifiée par de l'urée.

3. Composition selon la revendication 2, **caractérisée en ce que** la résine phénolique présente une proportion d'aldéhyde libre au plus égale à 0,1 %.

4. Composition selon l'une des revendications 1 à 3, **caractérisée en ce que** l'amine entrant dans la constitution de la résine amine-acide carboxylique est le dicyandiamide.

5. Composition selon l'une des revendications 1 à 4, **caractérisée en ce que** l'acide carboxylique entrant dans la constitution de la résine amine-acide carboxylique est un acide organique sous la forme d'un monomère ou d'un polymère, ou un précurseur d'acide carboxylique.

6. Composition selon la revendication 5, **caractérisée en ce que** l'acide renferme au moins deux fonctions carboxyliques.

7. Composition selon la revendication 6, **caractérisée en ce que** l'acide carboxylique est choisi parmi l'acide succinique, l'acide tartrique, l'acide maléique (ou l'anhydride maléique), l'acide citrique et l'acide 1,2,3,4-butanetétracarboxylique, et de préférence l'acide citrique.

8. Composition selon l'une des revendications 1 à 7, **caractérisée en ce que** la résine amine-acide carboxylique est modifiée par un alcool.

9. Composition selon la revendication 8, **caractérisée en ce que** l'alcool renferme au moins 2 fonctions hydroxyles libres, de préférence au moins 3 et avantageusement au plus 100, de préférence au plus 10.

10. Composition selon la revendication 8 ou 9, **caractérisée en ce que** l'alcool est le glucose, le saccharose ou un mélange d'oligosaccharide, et de préférence le glucose.

11. Composition selon l'une des revendications 1 à 10, **caractérisée en ce que** la résine amine-acide carboxylique, éventuellement modifiée par un alcool, est obtenue par réaction de dicyandiamide et d'acide citrique ou de dicyandiamide, d'acide citrique et d'oligosaccharides.

12. Composition selon l'une des revendications 1 à 11, **caractérisée en ce que** la résine amine-acide carboxylique, éventuellement modifiée par un alcool, est utilisée à raison de au plus 60 parts en poids de matières solides pour 100 parts en poids de matières solides de résine thermodurcissable et le cas échéant d'urée, avantageusement au moins 10 parts et mieux encore de 20 à 40 parts.

13. Composition d'encollage selon l'une des revendications 1 à 12, **caractérisée en ce qu'**elle comprend en outre les additifs ci-après dans les proportions suivantes calculées sur la base de 100 parts en poids de résine thermodurcissable, le cas échéant d'urée, et de résine amine-acide carboxylique, éventuellement modifiée par un alcool :
- 0 à 2 parts de silane, en particulier un aminosilane,
- 0 à 20 parts d'huile, de préférence 4 à 15 parts,
- 0 à 25 parts d'un catalyseur de réticulation, par exemple le sulfate d'ammonium ou l'hyposulfite de sodium, de préférence moins de 7 parts,
- 0 à 25 parts d'un sucre, de préférence le glucose ou le saccharose,
- 0 à 20 parts d'ammoniaque (solution à 20 % en poids), de préférence moins de 12 parts,
- 0 à 20 parts d'un silicone.

14. Produit d'isolation thermique et/ou acoustique apte à résister au feu, à base de laine minérale, notamment de roche ou de verre, liée par une composition d'encollage selon l'une des revendications 1 à 13.

15. Produit selon la revendication 14 , **caractérisé en ce que** la quantité totale de résine thermodurcissable, éventuellement d'urée, et de résine amine-acide carboxylique, éventuellement modifiée par un alcool, représente 1 à 20 % en poids (de matières solides) par rapport au poids total du produit d'isolation.

## Patentansprüche

1. Schlichtezusammensetzung zur Herstellung eines feuerbeständigen Wärme- und/oder Schalldämmprodukts auf Basis von Mineralwolle, **dadurch gekennzeichnet, dass** sie Folgendes enthält:
- ein wärmehärtbares Harz, das ausgewählt ist aus einem Phenolharz, wobei das Phenolharz zur Familie der Resole gehören und eventuell mit Harnstoff modifiziert sein kann, einem Harnstoff-Formaldehyd-Harz, einem Poly(meth)acrylsäure-Harz, einem Polyurethanharz, einem Epoxidharz, einem Alkydharz oder einem Harz auf Basis von Zucker und weiteren Bestandteilen, und
- ein Aminocarbonsäureharz, wobei das Amin ausgewählt ist aus Dicyandiamid, Melamin, Guanidin und Aminoguanidin, das Aminocarbonsäureharz eventuell mit einem Alkohol modifiziert ist,
das Aminocarbonsäureharz, das eventuell mit einem Alkohol modifiziert ist, in einer Menge von 5 bis 70 Gewichtsteilen Feststoffe auf 100 Gewichtsteile Feststoffe des wärmehärtbaren Harzes und gegebenenfalls des Harnstoffs eingesetzt ist.

2. Zusammensetzung nach Anspruch 1, **dadurch gekennzeichnet, dass** das wärmehärtbare Harz ein Phenolharz aus der Familie der Resole ist, das eventuell mit Harnstoff modifiziert ist.

3. Zusammensetzung nach Anspruch 2, **dadurch gekennzeichnet, dass** das Phenolharz einen Anteil an freiem Aldehyd von höchstens 0,1 % aufweist.

4. Zusammensetzung nach einem der Ansprüche 1 bis 3, **dadurch gekennzeichnet, dass** das Amin, das in die Konstitution des Aminocarbonsäureharzes eingeht, Dicyandiamid ist.

5. Zusammensetzung nach einem der Ansprüche 1 bis 4, **dadurch gekennzeichnet, dass** die Carbonsäure, die in die Konstitution des Aminocarbonsäureharzes eingeht, eine organische Säure in Form eines Monomers oder Polymers oder eines Carbonsäure-Vorläufers ist.

6. Zusammensetzung nach Anspruch 5, **dadurch gekennzeichnet, dass** die Säure mindestens zwei Carboxygruppen aufweist.

7. Zusammensetzung nach Anspruch 6, **dadurch gekennzeichnet, dass** die Carbonsäure ausgewählt aus Bernsteinsäure, Weinsäure, Maleinsäure (oder Maleinsäureanhydrid), Citronensäure und 1,2,3,4-Butantetracarbonsäure und vorzugsweise Citronensäure ist.

8. Zusammensetzung nach einem der Ansprüche 1 bis 7, **dadurch gekennzeichnet, dass** das Aminocarbonsäureharz mit einem Alkohol modifiziert ist.

9. Zusammensetzung nach Anspruch 8, **dadurch gekennzeichnet, dass** der Alkohol mindestens 2 freie Hydroxygruppen, vorzugsweise mindestens 3 und vorteilhaft höchstens 100, vorzugsweise höchstens 10, aufweist.

10. Zusammensetzung nach Anspruch 8 oder 9, **dadurch gekennzeichnet, dass** es sich bei dem Alkohol um Glucose, Saccharose oder ein Gemisch von Oligosacchariden, vorzugsweise aber um Glucose handelt.

11. Zusammensetzung nach einem der Ansprüche 1 bis 10, **dadurch gekennzeichnet, dass** das Aminocarbonsäureharz, das eventuell mit einem Alkohol modifiziert ist, durch Umsetzen von Dicyandiamid und Citronensäure oder von Dicyandiamid, Citronensäure und Oligosacchariden erhalten wird.

12. Zusammensetzung nach einem der Ansprüche 1 bis 11, **dadurch gekennzeichnet, dass** das Aminocarbonsäureharz, das eventuell mit einem Alkohol modifiziert ist, in einer Menge von höchstens 60 Gewichtsteilen Feststoffe auf 100 Gewichtsteile Feststoffe des wärmehärtbaren Harzes und gegebenenfalls des Harnstoffs, vorteilhaft von mindestens 10 Teilen und besser noch von 20 bis 40 Teilen eingesetzt ist.

13. Schlichtezusammensetzung nach einem der Ansprüche 1 bis 12, **dadurch gekennzeichnet, dass** sie ferner die nachstehenden Additive in den folgenden Anteilen, berechnet auf der Basis von 100 Gewichtsteilen des wärmehärtbaren Harzes, gegebenenfalls des Harnstoffs und des Aminocarbonsäureharzes, das eventuell mit einem Alkohol modifiziert ist, umfasst:
- 0 bis 2 Teile Silan, insbesondere ein Aminosilan,
- 0 bis 20 Teile Öl, vorzugsweise 4 bis 15 Teile,
- 0 bis 25 Teile eines Vernetzungskatalysators, beispielsweise Ammoniumsulfat oder Natriumthiosulfat, vorzugsweise weniger als 7 Teile,
- 0 bis 25 Teile eines Zuckers, vorzugsweise Glucose oder Saccharose,
- 0 bis 20 Teile Ammoniakwasser (Lösung zu 20 Gew.-%), vorzugsweise weniger als 12 Teile,
- 0 bis 20 Teile eines Silikons.

14. Feuerbeständiges Wärme- und/oder Schalldämmprodukt auf Basis von Mineralwolle, insbesondere Stein- oder Glaswolle, die durch eine Schlichtezusammensetzung nach einem der Ansprüche 1 bis 13 zusammengehalten wird.

15. Produkt nach Anspruch 14, **dadurch gekennzeichnet, dass** die Gesamtmenge des wärmehärtbaren Harzes, eventuell des Harnstoffs und des Aminocarbonsäureharzes, das eventuell mit einem Alkohol modifiziert ist, 1 bis 20 Gew.-% (Feststoffe), bezogen auf das Gesamtgewicht des Dämmprodukts, darstellt.

## Claims

1. A sizing composition for the manufacture of a fire-resistant thermal and/or acoustic insulation product based on mineral wool, **characterized in that** it contains:
- a thermosetting resin selected from a phenolic resin, the phenolic resin can belong to the family of resols and optionally modified by urea, a ureaformaldehyde resin, a poly(meth)acrylic acid resin, a polyurethane resin, an epoxy resin, an alkyd resin, or a resin based on sugar and on other component(s), and
- an amine-carboxylic acid resin wherein the amine is selected from dicyandiamide, melamine, guanidine and aminoguanidine, the amine-carboxylic acid resin is optionally modified by an alcohol,
the amine-carboxylic acid resin, optionally modified by an alcohol, is used in a proportion of 5 to 70 parts by weight of solids per 100 parts by weight of solids of thermosetting resin and where appropriate of urea.

2. The composition as claimed in claim 1, **characterized in that** the thermosetting resin is a phenolic resin belonging to the family of resols, optionally modified by urea.

3. The composition as claimed in claim 2, **characterized in that** the phenolic resin has a proportion of free aldehyde at most equal to 0.1%.

4. The composition as claimed in one of claims 1 to 3, **characterized**
**in that** the amine being incorporated into the composition of the amine-carboxylic acid resin is dicyandiamide.

5. The composition as claimed in one of claims 1 to 4, **characterized in that** the carboxylic acid being incorporated into the composition of the amine-carboxylic acid resin is an organic acid in the form of a monomer or of a polymer, or of a carboxylic acid precursor.

6. The composition as claimed in claim 5, **characterized in that** the acid contains at least two carboxylic functions.

7. The composition as claimed in claim 6, **characterized in that** the carboxylic acid is chosen from succinic acid, tartaric acid, maleic acid (or maleic anhydride), citric acid and 1,2,3,4-butanetetracarboxylic acid, and preferably citric acid.

8. The composition as claimed in one of claims 1 to 7, **characterized in that** the amine-carboxylic acid resin is modified by an alcohol.

9. The composition as claimed in claim 8, **characterized in that** the alcohol contains at least 2 free hydroxyl functions, preferably at least 3 and advantageously at most 100, preferably at most 10.

10. The composition as claimed in claim 8 or 9, **characterized in that** the alcohol is glucose, sucrose or an oligosaccharide mixture, and preferably glucose.

11. The composition as claimed in one of claims 1 to 10, **characterized in that** the amine-carboxylic acid resin, optionally modified by an alcohol, is obtained by reaction of dicyandiamide and citric acid or of dicyandiamide, citric acid and oligosaccharides.

12. The composition as claimed in one of claims 1 to 11, **characterized in that** the amine-carboxylic acid resin, optionally modified by an alcohol, is used in a proportion of most 60 parts by weight of solids per 100 parts by weight of solids of thermosetting resin and where appropriate of urea, advantageously at least 10 parts and better still from 20 to 40 parts.

13. The sizing composition as claimed in one of claims 1 to 12, **characterized in that** it furthermore includes the additives below in the following proportions calculated on the basis of 100 parts by weight of thermosetting resin, where appropriate of urea, and of amine-carboxylic acid resin, optionally modified by an alcohol:
- 0 to 2 parts of silane, in particular an aminosilane,
- 0 to 20 parts, preferably 4 to 15 parts, of oil,
- 0 to 25 parts, preferably less than 7 parts, of a crosslinking catalyst, for example ammonium sulfate or sodium hyposulfite,
- 0 to 25 parts of a sugar, preferably glucose or sucrose,
- 0 to 20 parts, preferably less than 12 parts, of aqueous ammonia (20 wt% solution),
- 0 to 20 parts of a silicone.

14. A fire-resistant thermal and/or acoustic insulation product, based on mineral wool, especially rock wool or glass wool, bound by a sizing composition as claimed in one of claims 1 to 13.

15. The product as claimed in claim 14, **characterized in that** the total amount of thermosetting resin, optionally of urea, and of amine-carboxylic acid resin, optionally modified by an alcohol, represents 1 to 20% by weight (of solids) relative to the total weight of the insulation product.
